# EUROPEAN PATENT SPECIFICATION

(11) **EP 2 960 467 B1**
(45) Date of publication and mention of the grant of the patent: **09.02.2022**
(21) Application number: 15174218.6
(22) Date of filing: 29.06.2015
(51) Int. Cl.: F02C 6/08, F02C 9/18

(54) **SIMPLIFIED ENGINE BLEED SUPPLY WITH LOW PRESSURE ENVIRONMENTAL CONTROL SYSTEM FOR AIRCRAFT**
NIEDERDRUCKZAPFLUFTENTNAHME FÜR KLIMATISIERUNGSSYSTEM EINES FLUGZEUGS
PIQUAGE D'AIR À BASSE PRESSION POUR SYSTÈME DE CLIMATISATION D'AÉRONEF

(30) Priority: 27.06.2014 US 201462018154 P
(43) Date of publication of application: 30.12.2015
(73) Proprietor: Raytheon Technologies Corporation, Hartford, CT 06101 (US)
(72) Inventor: Schwarz, Frederick M., Glastonbury, CT 06033 (US); Suciu, Gabriel L., Glastonbury, CT 06033 (US)
(74) Representative: Dehns

(56) References cited:
- EP-A2- 2 557 038
- EP-A2- 2 613 035

## Description

### BACKGROUND

This application relates to an environmental control system for an aircraft which taps low pressure compressed air for uses on an aircraft.

Environmental control systems are known, and associated with an aircraft. Typically, these systems tap air from a gas turbine engine on the aircraft, and send it to the aircraft cabin, and other air uses on the aircraft.

The systems typically tap low pressure compressed air from a lower pressure compressor location, and higher pressure compressed air from a higher pressure compressor location. The two are utilized at distinct times during the operation of a gas turbine engine, dependent on the needs, and the available air.

In the prior art, when the higher pressure air is tapped, it is at a very high temperature. Thus, cooling of the air must occur. It is typical that some form of intercooler or other heat exchanger is included.

In addition, the higher pressure compressed air has already been compressed beyond the level of the lower pressure compressed air. The more higher pressure compressed air that is diverted away from engine uses, the lower the efficiency of the engine.

Documents EP 2 557 038 A2 and EP 2 613 035 A2 disclose prior art environmental control systems.

### SUMMARY

The invention relates to an environmental control system according to claim 1 and to a gas turbine engine according to claim 4.

Although the different examples have specific components shown in the illustrations, embodiments of this disclosure are not limited to those particular combinations.

The features disclosed herein can be best understood from the following specification and drawings, the following of which is a brief description.

### BRIEF DESCRIPTION OF THE DRAWINGS

Figure 1 schematically shows an embodiment of a gas turbine engine.
Figure 2 shows an embodiment of an environmental control system for an aircraft.
Figure 3 shows a schematic of the Figure 2 system.

### DETAILED DESCRIPTION

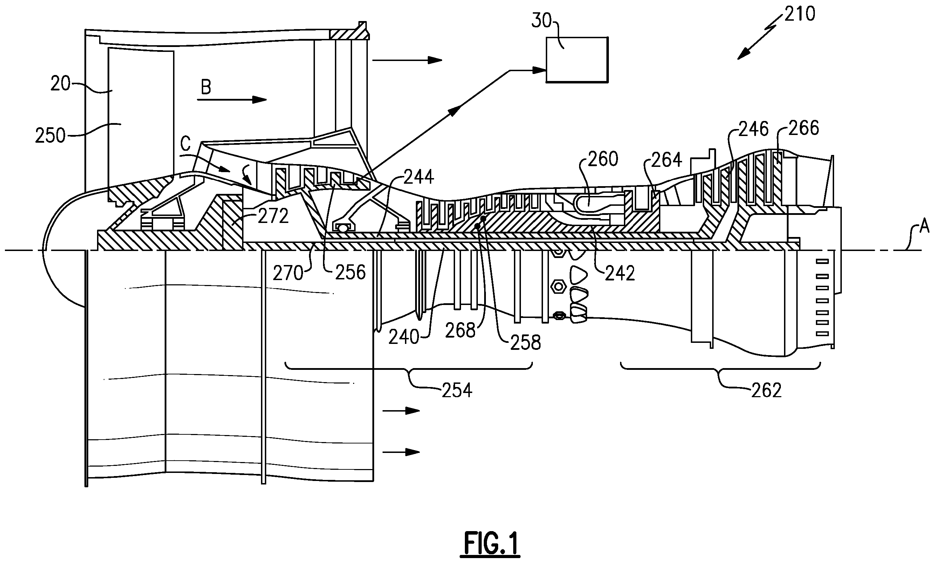

A gas turbine engine 210 is shown in Figure 1. As shown, the engine 210 includes a fan 250 (which includes a plurality of fan blades 20), a main compressor section 254 (which includes both a low pressure compressor 256 and a high pressure compressor 258), a combustor 260, and a turbine section 262 (which includes a high pressure turbine 264, an intermediate pressure turbine 246 and a low pressure turbine 266). The high pressure compressor 258 is driven, via a first spool 268, by the high pressure turbine 264. The low pressure compressor 256 is driven, via a second spool through an intermediate shaft 244 coupled to the intermediate pressure turbine 246. The low pressure turbine 266 drives the fan blades 20 of the fan section 250. In this example, the low pressure turbine 266 drives an inner shaft 240 to drive a geared architecture 272 that in turn drives the fan section 250. It should be appreciated, that the low pressure turbine 266 could also directly drive the fan section 250 without the speed reduction provided by the geared architecture 272.

The fan section 250 drives air along a bypass flow path B while the compressor section 254 draws air in along a core flow path C where air is compressed and communicated to a combustor section 260. In the combustor section 260, air is mixed with fuel and ignited to generate a high pressure exhaust gas stream that expands through the turbine section 262 where energy is extracted and utilized to drive the fan section 250 and the compressor section 254.

The intermediate or second spool includes the intermediate shaft 244 that couples the intermediate turbine section 246 to the low pressure (or first) compressor 256. A third spool 270 generally includes the inner shaft 240 that connects the fan 250 to the low pressure (or third) turbine section 266. The low pressure turbine 266 may also be referred to as the fan drive turbine because it drives the fan section 250 either through the geared architecture 272, or through a direct connection. In this disclosed example, the inner shaft 240 drives the fan 250 through a speed change device, such as the geared architecture 272, to drive the fan 250 at a lower speed than the low speed spool 270. The high-speed spool 268 includes an outer shaft 242 that interconnects the high pressure (or second) compressor section 258 and the high pressure (or first) turbine section 264. The inner shaft 240, the intermediate shaft 244 and the outer shaft 242 are concentric and rotate via the bearing systems disposed about the engine central longitudinal axis A.

The disclosed gas turbine engine 210 in one example is a high-bypass geared aircraft engine. In a further example, the gas turbine engine 210 includes a bypass ratio greater than about six (6:1), with an example embodiment being greater than about ten (10:1). The example geared architecture 272 is an epicyclical gear train, such as a planetary gear system, star gear system or other known gear system, with a gear reduction ratio of greater than about two (2:1).

In one disclosed embodiment, the gas turbine engine 210 includes a bypass ratio greater than about ten (10:1) and the fan diameter is significantly larger than an outer diameter of the low pressure compressor 256. It should be understood, however, that the above parameters are only exemplary of one embodiment of a gas turbine engine including a geared architecture and that the present disclosure is applicable to other gas turbine engines.

A significant amount of thrust is provided by the bypass flow B due to the high bypass ratio. The fan section 250 of the engine 210 is designed for a particular flight condition -- typically cruise at about 0.8 Mach and about 35,000 feet (10,668 metres). The flight condition of 0.8 Mach and 35,000 ft. (10,668 metres), with the engine at its best fuel consumption - also known as "bucket cruise Thrust Specific Fuel Consumption ('TSFC')" - is the industry standard parameter of pound-mass (lbm) of fuel per hour being burned divided by pound-force (lbf) of thrust the engine produces at that minimum point.

"Low fan pressure ratio" is the pressure ratio across the fan blade alone, without a Fan Exit Guide Vane ("FEGV") system. The low fan pressure ratio as disclosed herein according to one non-limiting embodiment is less than about 1.50. In another non-limiting embodiment the low fan pressure ratio is less than about 1.45.

"Low corrected fan tip speed" is the actual fan tip speed in ft/sec divided by an industry standard temperature correction of [(Tram °R)/ (518.7°R)] ^{0.5}. The "Low corrected fan tip speed", as disclosed herein according to one non-limiting embodiment, is less than about 1150 ft/second (350.52 metres/second).

The example low pressure compressor section 256 is driven by the intermediate turbine 246. The example low pressure compressor section 256 includes at least three (3) stages and up to about eight (8) stages. In one disclosed embodiment the low pressure compressor 256 includes at least eight (8) stages.

An environmental control system 30 for use on an aircraft receives air from portions of the main compressor 254. In this example, the ECS system 30 receives air from a portion of the low pressure compressor 256.

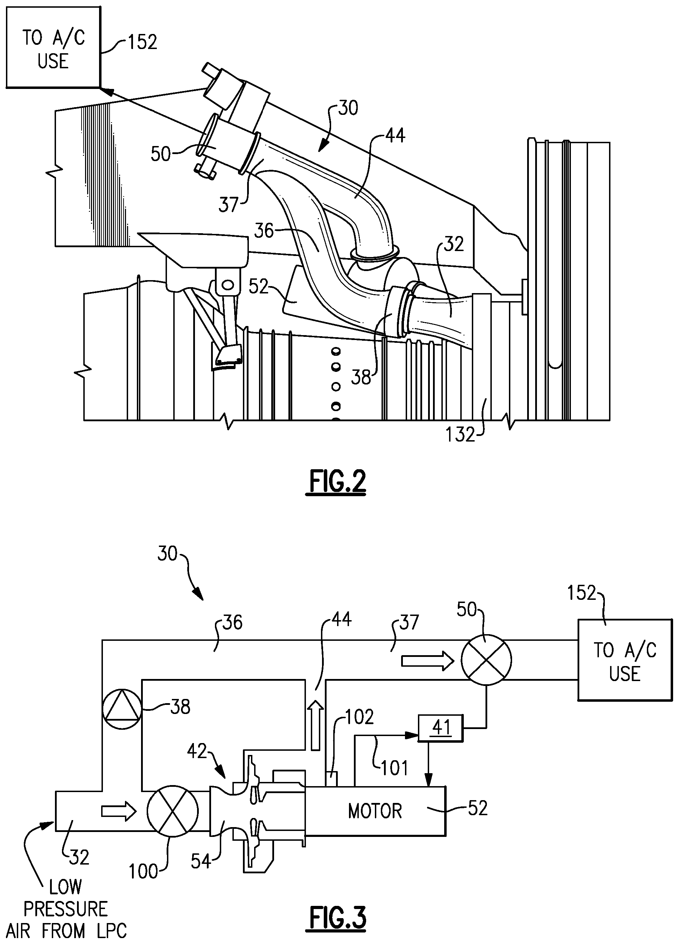

Referring to Figure 2 with continued reference to Figure 1, the ECS 30 for use on an aircraft is illustrated. A tap 32 is at a lower pressure location 132. Location 132 is from the lower pressure compressor section 256. In one disclosed example the lower pressure location 132 where bleed air is drawn from the low pressure compressor section 256 is after at least a 3^{rd} stage. In another example, the tap 32 is located up to aft of the 8^{th} stage of the low pressure compressor 256.

Referring to Figure 3 with continued reference to Figure 2, the tap 32 leads to a first passage 36 having a check valve 38, and also into a compressor section 54 of the turbocompressor 42 driven by an electric motor 52. An outlet 44 of the compressor section 54 merges with the first passage 36 and both pass through a combined outlet 37 to a valve 50 and thereafter to an aircraft use 152. The example electric motor 52 is a variable speed electric motor, but, in examples not falling under the scope of the claimed invention, it could also be another kind of motor such as a hydraulic motor, or even a power take-off. An example power take-off could include a shaft driven by one of the spools and includes a clutch for selective engagement.

As shown in Figure 3, the tap 32 alternatively leads to compressor section 54 or into first passage 36 leading to the combined outlet 37. Check valve 38 allows flow from tap 32 to the first passage 36 in a single direction. It also provides some resistance to flow in that direction.

The electric motor 52 drives the compressor section 54 to compress the air from the tap 32, and increase its pressure. Bleed airflows through the conduit 36 and mixes with compressed airflow from the outlet 44, and pass to the combined outlet 37. When the compressor section 54 is being driven by the electric motor 52, there is suction applied to the first passage 36 and the tap 32, and thus check valve 38 will remain closed.

In one example, bleed air is taken from a stage after a 3^{rd} stage of the low pressure compressor 256 and fed to the tap 32. In another example, bleed air is taken at around the 8^{th} stage of the low pressure compressor 256. The air from the tap 32 is used generally exclusively under certain conditions when the heat to be rejected is at a maximum. As an example, the air will tend to pass from tap 32 through the check valve 38 to the first passage 36 during climb and cruise. The electric motor 52 is not utilized when the bleed air from the low pressure compressor 256 is sufficient to provide the desired pressure and temperatures for the aircraft use 152. However, under certain conditions, as an example a descent, the electric motor 52 is actuated to drive the compressor section 54. The air from tap 32 passes to the compressor section 54. The valve 50 is a control valve that modulates flow to the aircraft use in response to airflow demands and requirements. The electric motor 52 drives the compressor section 54 to provide the required pressure increase of pressure from airflow from the low pressure compressor 256.

A valve 100 is provided prior to the compressor section 54 and is controlled by controller 41. The valve 100 is actuated to close off flow from the low pressure compressor 256 to control and modulate low pressure airflow into the compressor section 54.

A sensor 102 is provided that generates data indicative of motor speed that is sent by way of communication line 101 to the controller 41. The controller 41 will actuate, and/or close valves 100, 38 and 50 in a desired combination to prevent damage to the system. In one example, the controller 41 will receive information from the sensor 102 indicative of the onset, or actual overspeed condition of the electric motor 52. The controller 41 utilizes at least data from the sensor 102, along with other data available of engine operation to recognize a current or potential overspeed condition that warrants shutdown or other remedial actions.

The reduction in size and capacity elimination of a required fan heat exchanger, or the reduction in its size owing to the reduced temperature of the low pressure bleed and the elimination of air from the higher compression location, is particularly valuable when combined with a system incorporating a gear drive for the turbo fan, such as shown at 272 in Figure 1.

Although an example embodiment has been disclosed, a worker of ordinary skill in this art would recognize that certain modifications would come within the scope of this disclosure. For that reason, the following claims should be studied to determine the true scope and content of this disclosure.

## Claims

1. An environmental control system (30) for an aircraft with a gas turbine engine, the environmental control system comprising:
a low pressure tap (32) configured to be associated with a location in a main compressor section of the gas turbine engine;
a first passage (36), a downstream outlet, a compressor (54) and an electric motor (52);
wherein the low pressure tap communicates airflow to the first passage (36) leading to the downstream outlet;
a second passage in communication with the low pressure tap and the compressor (54) driven by the electric motor (52);
a combined outlet (37) intermixing airflow from the first passage and from the compressor driven by the electric motor and passing the airflow downstream for aircraft cabin and other uses; and
a second control valve (100) disposed between the low pressure tap (32) and the compressor;
**characterised in** comprising a first control valve (50) downstream of the combined outlet.

2. The environmental control system as recited in claim 1, wherein a check valve (38) is disposed within said first passage (36) associated with said low pressure tap.

3. The environmental control system as recited in any of claims 1 or 2, including a sensor (102) generating data indicative of a speed of the electric motor (52) and communicating the data indicative of a speed of the electric motor (52) to a controller.

4. A gas turbine engine (210) assembly for an aircraft comprising:
a fan section delivering air into a main compressor section (254), said main compressor section including a first compressor section (256) and a second compressor section (258) operating at a higher pressure than the first compressor section (256), said main compressor section (254) compressing air and delivering air into a combustion section (260) where the air is mixed with fuel and ignited to generate products of combustion that are passed over a turbine section (262) to drive said fan section and main compressor sections (254);
wherein the turbine section (262) includes a high pressure turbine (264), an intermediate pressure turbine (246) and a low pressure turbine (266), wherein the second compressor section (258) is driven by the high pressure turbine (264), the first compressor section (258) is driven by the intermediate pressure turbine (246) and the fan section is driven by the low pressure turbine (266); and
the environmental control system (30) as recited in any of claims 1, 2 or 3.

5. The gas turbine engine assembly as recited in claim 4, including a gearbox driven by a fan drive turbine of the turbine section to drive said fan section, wherein the gearbox provides a gear reduction of at least 2.0.

6. The gas turbine engine assembly as recited in any of claims 4 or 5, wherein the first compressor section (256) includes at least four stages and no more than eight stages.

7. The gas turbine engine assembly as recited in any of claims 4-6, wherein bleed air is taken from at least a third stage of the first compressor section (256).

8. The gas turbine engine assembly as recited in any of claims 4-7, including a controller configured for controlling the first control valve and the second control valve responsive to an overspeed condition of the electric motor.

## Patentansprüche

1. Klimatisierungssystem (30) für ein Luftfahrzeug mit einem Gasturbinentriebwerk, wobei das Klimatisierungssystem Folgendes umfasst:
einen Niederdruckhahn (32), der dazu konfiguriert ist, einer Stelle in einem Hauptverdichterabschnitt des Gasturbinentriebwerks zugeordnet zu sein;
einen ersten Kanal (36), einen stromabwärtigen Auslass, einen Verdichter (54) und einen Elektromotor (52);
wobei der Niederdruckhahn einen Luftstrom zu dem ersten Kanal (36) lenkt, der zu dem stromabwärtigen Auslass führt;
einen zweiten Kanal in Kommunikation mit dem Niederdruckhahn und dem Verdichter (54), der durch den Elektromotor (52) angetrieben wird;
einen kombinierten Auslass (37), der einen Luftstrom aus dem ersten Kanal und aus dem durch den Elektromotor angetriebenen Verdichter vermischt und den Luftstrom stromabwärts für die Luftfahrzeugkabine und andere Zwecke leitet; und
ein zweites Steuerventil (100), das zwischen dem Niederdruckhahn (32) und dem Verdichter angeordnet ist;
**dadurch gekennzeichnet, dass** es ein erstes Steuerventil (50) stromabwärts von dem kombinierten Auslass umfasst.

2. Klimatisierungssystem nach Anspruch 1, wobei ein Rückschlagventil (38) innerhalb des ersten Kanals (36), der dem Niederdruckhahn zugeordnet ist, angeordnet ist.

3. Klimatisierungssystem nach einem der Ansprüche 1 oder 2, das einen Sensor (102) beinhaltet, der auf eine Drehzahl des Elektromotors (52) hinweisende Daten erzeugt und die auf eine Drehzahl des Elektromotors (52) hinweisenden Daten an eine Steuerung kommuniziert.

4. Gasturbinentriebwerks(210)anordnung für ein Luftfahrzeug, umfassend:
einen Gebläseabschnitt, der Luft in einen Hauptverdichterabschnitt (254) einleitet, wobei der Hauptverdichterabschnitt einen ersten Verdichterabschnitt (256) und einen zweiten Verdichterabschnitt (258) beinhaltet, der bei einem höheren Druck als der erste Verdichterabschnitt (256) betrieben wird, wobei der Hauptverdichterabschnitt (254) Luft verdichtet und Luft in einen Verbrennungsabschnitt (260) einleitet, in dem die Luft mit Kraftstoff gemischt und entzündet wird, um Verbrennungsprodukte zu erzeugen, die über einen Turbinenabschnitt (262) geleitet werden, um den Gebläseabschnitt und Hauptverdichterabschnitte (254) anzutreiben;
wobei der Turbinenabschnitt (262) eine Hochdruckturbine (264), eine Zwischendruckturbine (246) und eine Niederdruckturbine (266) beinhaltet, wobei der zweite Verdichterabschnitt (258) durch die Hochdruckturbine (264) angetrieben wird, der erste Verdichterabschnitt (258) durch die Zwischendruckturbine (246) angetrieben wird und der Gebläseabschnitt durch die Niederdruckturbine (266) angetrieben wird; und
das Klimatisierungssystem (30) nach einem der Ansprüche 1, 2 oder 3.

5. Gasturbinentriebwerksanordnung nach Anspruch 4, die ein Getriebe beinhaltet, das durch eine Gebläseantriebsturbine des Turbinenabschnitts antrieben wird, um den Gebläseabschnitt anzutreiben, wobei das Getriebe eine Getriebeuntersetzung von mindestens 2,0 bereitstellt.

6. Gasturbinentriebwerksanordnung nach einem der Ansprüche 4 oder 5, wobei der erste Verdichterabschnitt (256) mindestens vier Stufen und nicht mehr als acht Stufen beinhaltet.

7. Gasturbinentriebwerksanordnung nach einem der Ansprüche 4-6, wobei Zapfluft aus mindestens einer dritten Stufe des ersten Verdichterabschnitts (256) entnommen wird.

8. Gasturbinentriebwerksanordnung nach einem der Ansprüche 4-7, die eine Steuerung beinhaltet, die zur Steuerung des ersten Steuerventils und des zweiten Steuerventils als Reaktion auf einen Überdrehzahlzustand des Elektromotors konfiguriert ist.

## Revendications

1. Système de climatisation (30) pour un aéronef avec un moteur à turbine à gaz, le système de climatisation comprenant :
un robinet basse pression (32) configuré pour être associé à un emplacement d'une section de compresseur principale du moteur à turbine à gaz ;
un premier passage (36), une sortie aval, un compresseur (54) et un moteur électrique (52) ;
dans lequel le robinet basse pression communique un flux d'air au premier passage (36) conduisant à la sortie aval ;
un second passage en communication avec le robinet basse pression et le compresseur (54) entraîné par le moteur électrique (52) ;
une sortie combinée (37) mélangeant le flux d'air du premier passage et du compresseur entraîné par le moteur électrique et faisant passer le flux d'air en aval pour la cabine d'aéronef et d'autres utilisations ; et
une seconde valve de commande (100) disposée entre le robinet basse pression (32) et le compresseur ;
**caractérisé en ce qu'**il comprend une première valve de commande (50) en aval de la sortie combinée.

2. Système de climatisation selon la revendication 1, dans lequel un clapet anti-retour (38) est disposé à l'intérieur dudit premier passage (36) associé audit robinet basse pression.

3. Système de climatisation selon l'une quelconque des revendications 1 ou 2, comportant un capteur (102) générant des données indicatives d'une vitesse du moteur électrique (52) et communiquant les données indicatives d'une vitesse du moteur électrique (52) à un dispositif de commande.

4. Ensemble de moteur à turbine à gaz (210) pour un aéronef comprenant :
une section de soufflante délivrant de l'air dans une section de compresseur principale (254), ladite section de compresseur principale comportant une première section de compresseur (256) et une seconde section de compresseur (258) fonctionnant à une pressure plus élevée que la première section de compresseur (256), ladite section de compresseur principale (254) comprimant l'air et délivrant l'air dans une section de combustion (260) où l'air est mélangé avec du carburant et allumé afin de générer des produits de combustion qui sont passés dans une section de turbine (262) afin d'entraîner ladite section de soufflante et les sections de compresseur principales (254) ;
dans lequel la section de turbine (262) comporte une turbine haute pression (264), une turbine à pression intermédiaire (246) et une turbine basse pression (266), dans lequel la seconde section de compresseur (258) est entraînée par la turbine haute pression (264), la première section de compresseur (258) est entraînée par la turbine à pression intermédiaire (246) et la section de soufflante est entraînée par une turbine basse pression (266) ; et
le système de climatisation (30) selon l'une quelconque des revendications 1, 2 ou 3.

5. Ensemble de moteur à turbine à gaz selon la revendication 4, comportant une boîte de vitesses entraînée par une turbine d'entraînement de soufflante de la section de turbine afin d'entraîner ladite section de soufflante, dans lequel la boîte de vitesses fournit une réduction d'engrenage d'au moins 2,0.

6. Ensemble de moteur à turbine à gaz selon l'une quelconque des revendications 4 ou 5, dans lequel la première section de compresseur (256) comporte au moins quatre étapes et pas plus de huit étapes.

7. Ensemble de moteur à turbine à gaz selon l'une quelconque des revendications 4 à 6, dans lequel l'air de prélèvement est prélevé à au moins une troisième étape de la première section de compresseur (256).

8. Ensemble de moteur à turbine à gaz selon l'une quelconque des revendications 4 à 7, comportant un dispositif de commande configuré pour commander la première valve de commande et la seconde valve de commande en réponse à une condition de survitesse du moteur électrique.
